# EUROPEAN PATENT SPECIFICATION

(11) **EP 1 122 456 B1**
(45) Date of publication and mention of the grant of the patent: **16.08.2001**
(21) Application number: 00830174.9
(22) Date of filing: 09.03.2000
(51) Int. Cl.: F16D 65/12, B22D 19/12

(54) **Ventilated disc for disk brake**
Belüftete Scheibe für Scheibenbremse
Disque ventilé pour frein à disque

(43) Date of publication of application: 08.08.2001
(73) Proprietor: Freni Brembo S.p.A., 24035 Curno, Bergamo (IT)
(72) Inventor: Tironi, Giovanni Mario, 24044 Dalmine - Bergamo (IT)
(74) Representative: Maccalli, Marco

(56) References cited:
- EP-A- 0 077 137
- EP-B- 0 680 571
- DE-A- 2 263 643
- GB-A- 1 032 923

## Description

The present invention relates to a ventilated disc for a disc brake and its method of manufacture.

More specifically, the present invention relates to a disc for a disc brake for a vehicle.

It is known that in the brakes of vehicles, when the brakes are applied, the kinetic energy of the moving vehicle is converted into thermal energy or heat which builds up in the brake, specifically in the disc of the brake, and must be dissipated in order to prevent overheating which would prejudice its efficiency.

For this purpose, brake discs have been developed in which the friction track, on which the pads act, is made up of two circular plates, rings, annuli or rims juxtaposed at a convenient distance from each other and joined together by joining elements, such as pegs, studs or flanges, in such a way as to form radial channels for the circulation of air between the two rims and so increase the radiating surface area of the disc and induce by centrifugal action a much greater convective airflow than that developed on the external surface of the disc, in the course of its rotation, resulting in much more efficient cooling.

As is known, the two rims can be made separately and joined together with bolts or rivets or even, preferably, they can be produced as a single piece by casting.

Although this arrangement is very effective, the heating of the rims cannot be limited sufficiently and produces large thermal expansions in the rims relative to the radially more central part of the disc.

Deformations of the disc therefore occur: these prejudice braking efficiency, can lead to disc breakage due to thermal fatigue and must at all costs be prevented.

To this end the usually bell-shaped central part of the disc or disc hub, whose function is to provide support and anchorage to the wheel hub, is in many cases produced separately from the friction track and joined to it by constraints that transmit rotational drive to the friction track and transfer a torque to the disc hub and, at the same time, allow freedom of radial movement to permit thermal expansion of the friction track without the development of internal tensions in the disc hub.

The constraints also limit the transfer of heat, by conduction, from the friction track to the disc hub and to the wheel hub.

The result of this is a highly complicated structure of not insignificant cost, to simplify which it has been proposed, as described for example in document EP 0,680,571, that the friction track be cast, with radial housings being drilled in the friction track, and the disc hub being attached to the friction track by pins integral with the disc hub and inserted, with the ability to slide freely axially, in the housings formed in the friction track, thus permitting thermal expansion of the friction track.

The pins may be fastened to the disc hub by welding or by embedding one end thereof as an insert in the molten metal of the disc hub.

This presupposes the prior formation of the friction track, the insertion of the pins into the housings of the friction track, the formation of a mould for the disc hub, in which to at least partly place the already-prepared friction track, or at least the ends of the pins, and the subsequent casting of the disc hub.

Although the production process is to a certain degree simplified, it is still complicated and expensive owing to the necessity of machining the housings for the pins and to the construction of independent moulds for the friction track and for the disc hub, as well as to the performing of successive castings.

Moreover the locking of the pins as inserts in the disc hub, the thickness and general dimensions of which ought to be limited, is not reliable.

The final drawback is that the finishing of the disc hub and the balancing of the assembled disc are problematic operations.

All these problems are solved by the ventilated disc for a disc brake and its method of manufacture forming the subject of the present invention.

According to this invention the brake disc consists of a cast friction track or rim to which a disc hub, which is produced in the same casting process (with a single mould although not necessarily with the same cast material), is attached by means of partly embedded pins integral with the track and partly embedded, but with freedom of axial movement, in the disc hub in such a way as to permit, under working conditions, thermal expansion of the rim around the disc hub and at the same time ensure a precise permanent mutual coupling, without play, between rim and disc hub. By this means the operations of mechanically finishing and balancing the disc are enormously simplified and made very simple.

The features and advantages of the invention will become clearer in the course of the following description of a preferred embodiment and of variants thereof. The description refers to the appended drawings in which:
- Figure 1 is a front view, partly in section as indicated by the view marked I-I in Figure 2, of a ventilated disc in accordance with the present invention,
- Figure 2 is a diametrical view through the disc seen in Figure 1 along the composite section marked II-II in Figure 1,
- Figure 3 illustrates a sector of a core, viewed as indicated by the composite section III-III in Figure 4, used for casting the ventilated disc seen in Figures 1 and 2,
- Figure 4 is a section through the sector of the core viewed on IV-IV as marked in Figure 3 and of the mould used for producing the disc seen in Figures 1 and 2,
- Figure 5 is a section on the view marked IV-IV in Figure 3 through the casting obtained with the mould and associated core of Figure 4,
- Figure 6 is a section taken on the view marked IV-IV in Figure 3 through the brake disc produced with mechanical finishing of the casting seen in Figure 5, and
- Figure 7 is a section taken on the view marked IV-IV in Figure 3 through a variant of the casting.

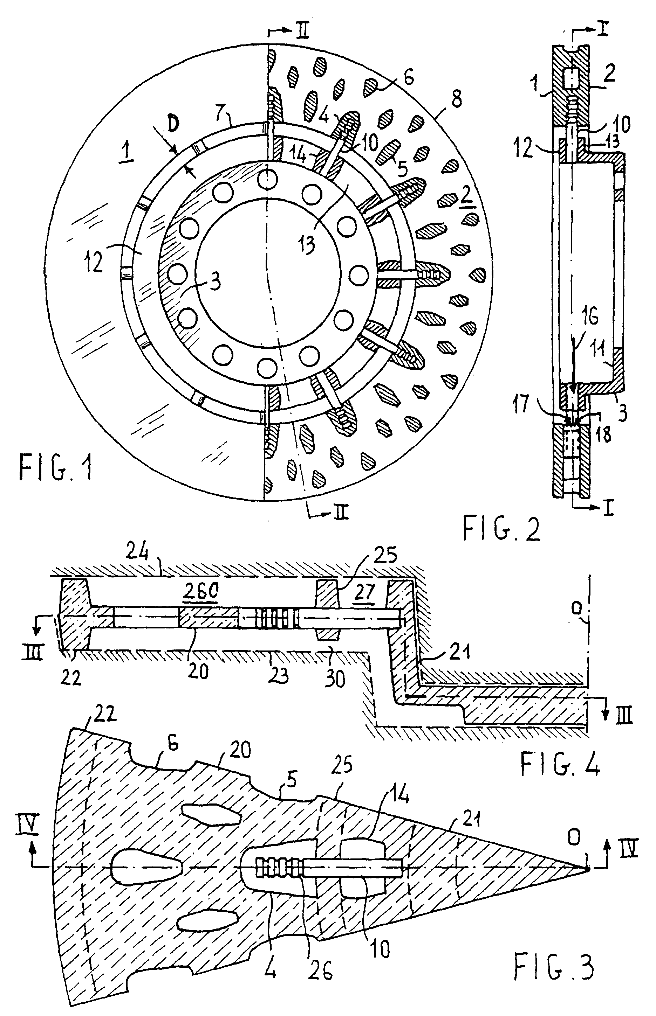

Referring to Figures 1 and 2 together, a brake disc in accordance with the present invention comprises a friction track or rim made up of two flat rings or plates 1, 2 and a mounting element or disc hub 3. Both are made by casting.

The rings 1, 2, which are axially aligned, parallel with each other and set a suitable distance apart, are interconnected by a plurality of bridges, such as 4, 5, 6, suitably shaped to create, between the rings, a series of generally radial aeration ducts through which the air can flow, largely unimpeded, from the inner edge 7 of the friction track towards the peripheral outer edge 8.

Embedded in each of a suitable number of bridges 4 that meet the inner edge 7 of the said friction track, in a uniform distribution, is one end of a corresponding number of cylindrical pins, such as 10, arranged like spokes.

The embedded end of each pin 10 has annular grooves (or equivalent variations of thickness such as ridges, indentations and the like) so that the pins are held rigidly as inserts in the cast material of the rings 1, 2 and of the bridges 4, 5, 6.

The pins may advantageously be made from a tough, high-strength material such as stainless steel or carbon steel, while the material of the rings, for which great hardness and resistance to abrasion are required, is generally cast iron.

The pins 10 provide the connection with the supporting disc hub 3.

The disc hub consists of a cylindrical body, slightly conical for ease of demoulding, partly closed at one end by a flat rim 11 containing holes at suitable points for fixing to a wheel hub, and terminating at the other end in a thickened flange whose periphery is close to the inner edge 7 of the friction track, from which it is separated by a suitable distance or space D of the order of a few millimetres.

The flange of the disc hub 3 is similarly formed from two axially aligned rings 12, 13 parallel with each other and a suitable distance apart: they are connected by a plurality of bridges, such as 14, shaped to form, between the rings, a series of radial aeration ducts 15 through which the air can flow unobstructed towards the innermost channels of the friction track 1, 2.

The other ends of the pins 10 are inserted into each of a suitable number of bridges 14 through which they pass completely and in which they can slide axially.

Together, the pins provide an accurate and precisely centred coupling between the friction track and the disc hub 3 and at the same time allow the track to expand thermally relative to the disc hub.

The result is a brake disc of the greatest constructional simplicity and of great reliability, in which excellent ventilation is provided by broad channels that enable a flow of air to enter between the rings 1, 2 both from the centre of the disc hub 3 (flowline 16) and from the sides of the rings 12, 13 (flowlines 17, 18).

As will be seen later, the material of the disc hub 3 may be the same as that used for the friction track, e.g. cast iron, or may be a material with different mechanical characteristics, e.g. steel or a light alloy.

To manufacture the disc described above, the following process is employed:

A casting core is first formed in moulding sand, or preferably in core sand, in the general shape of a circular plate like the rim of a hat 20, with the central portion like a cylindrical cup 21 of axis O.

One sector of the core is shown in plan view in the section, Figure 3, and a view in diametrical cross section through the same sector is shown in Figure 4.

The solid part of the hat rim 20 corresponds, of course, to the open parts that must be left in the interior of the friction track and of the flange of the disc hub, while the central cupped portion 21 acts as a complementary mould or cope.

The edge of the plate is reinforced by a thick core print or rim 22 standing proud of the plate both below and above to act as a spacer for the mould or drag, shown schematically in Figure 4 by the broken line 23, and for the cope, shown diagrammatically in Figure 4 by the broken line 24. In other words the said core print holds and supports the core in the correct position for casting.

A second circular bead 25 stands proud both below and above, in an intermediate position on the hat rim 20 close to the central cup 21, its purpose being to form the annular separating space (space D, Fig. 1) between friction track and disc hub.

The voids 4, 5, 6 of the core correspond to the bridges with the same reference numbers (in Figure 1) that connect together the two rings of the friction track.

Void 14 of the core sector, and the other similar voids (not shown), correspond to the bridges 14 (Fig. 1) that connect together the two rings of the disc hub flange.

The pins such as 10 designed to couple the friction track and the disc hub are housed and positioned accurately in the core.

Accurate and stable positioning, even in the presence of stresses induced by the fluid mass as it is poured in, is ensured by the core print or rim 22, as well as by the bead 25 and by the cylindrical portion of the cup 21.

Clearly, the core box in which the core is formed includes filled areas, corresponding to the core voids 4 and 14, containing housings for the precise reception of the pins 10 which are thus partly incorporated in the core.

The portion of each pin 10 lying in the voids such as 4 is provided with annular grooves 26 whose purpose is to securely fix the grooved portion to the material of the casting.

The other portion of each pin 10 is advantageously lubricated with graphite so that it does not become welded to the molten metal during the subsequent casting.

The core formed in this way is located (Figure 4) in a drag 23, which is essentially a flat disc with a suitable frustoconical recess in the centre, with the cup of the core housed in the recess and resting on its bottom and the rim 22 resting on the surface of the disc.

The drag is closed by a cope 24, which is also a flat disc, with a frustoconical relief that fits into the cavity of the cup of the core, on which it rests.

The flat disc however rests on the rim 22 and on the bead 25.

The cope is of course provided with sprue holes and vent holes (not shown), as may also the drag, depending on the methods and positioning of the mould for the casting. For example, it may be convenient to cast with the mould upside down compared with Figure 4, and in particular with the cope 24 underneath the drag 23 so that as the molten metal is poured into them it initially fills chambers 260 and 27 if these are connected to each other.

It will be observed that the bead 25 does not rest on the drag 23 and that the void left between the drag and the cope consists essentially of two separate chambers 260, 27 communicating with each other through a gap 30 left between the bead 25 and the drag 23.

As a variant, another gap may also be left between the bead 25 and the cope 24.

In this way in a single casting operation the two communicating chambers 260, 27 can be filled with molten metal of the same type, such as cast iron.

After the metal has been cast and allowed to cool, the casting can be extracted from the mould and the core removed by shaking and optionally by blasting.

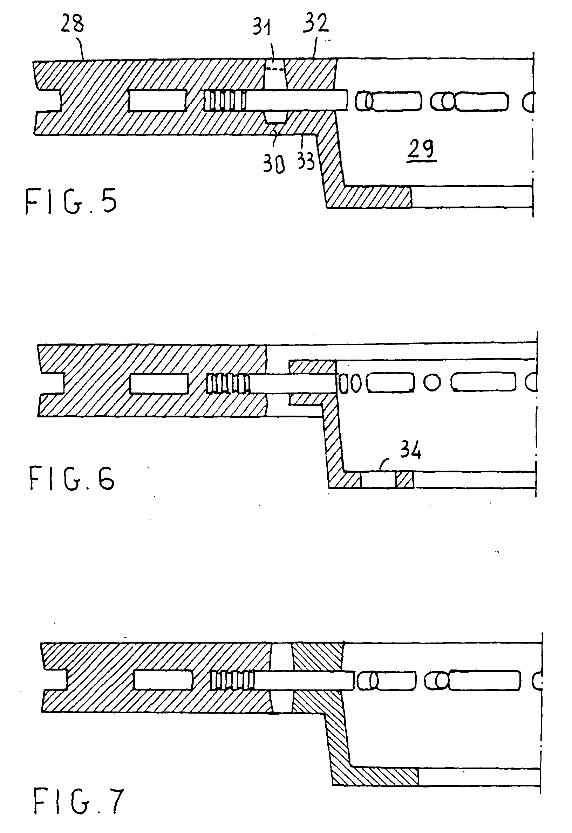

The resulting product is illustrated in cross section in Figure 5.

It will be seen that the friction track 28 and the disc hub 29 are joined together by means of the pins 10 and by the material filling the gap 30 (and an optional gap 31, if provided as in the variant).

In addition, the pins 10 project somewhat into the disc hub 29 because their ends were conveniently inserted in the material of the core for more secure and precise positioning.

At this point it is possible, by lathe-turning operations (quite easy because the workpiece is monolithic and the various clamping and reference points can be determined accurately at each stage of the operation), to remove all the excess unwanted metal from the intended final product, particularly the projecting parts of the pins 10 and the unwanted metal 32, 33 of the disc hub flange, including the material occupying the gap 30 and the optional gap 31.

Holes 34 are also made (or bored out if already present in the casting) in the disc hub (Fig. 6) so that it can be fixed to a wheel hub, and finally the disc is balanced.

The resulting product is shown in section in Figure 6.

Mention has been made in the course of the above description of possible alternative embodiments of the core (two gaps 30, 31 instead of only one, disc hub holes produced by the core during casting) which lead to the formation of castings which are different in certain details but which lead, after machining, to the same finished product.

A further variant which it is worth mentioning specifically, is the following: the core of Figure 4 and/or the corresponding drag and cope can be produced in such a way that the bead 25 completely separates the chamber 260, representing the friction track, from the chamber 27, representing the disc hub.

By this means, and of course providing separate pouring and vent holes, it is possible to obtain by casting, preferably in casting operations following immediately one after the other, if not simultaneous, both the friction track and the disc hub from different materials, for example cast iron and steel, with differing mechanical characteristics specifically suited to the particular function the two components are to perform. In this case, as shown in the sectional view of Figure 7, the two components of the casting are attached to each other mechanically by the pins 10 only.

## Claims

1. Ventilated disc for a disc brake, of the type in which a friction track (1, 2) is produced by casting and connected to a supporting disc hub (3), also cast, by means of connecting elements in the form of pins (10) distributed around the perimeter of the said supporting disc hub (3), the disc being characterized in that the said pins (10) have one end provided with gripping means firmly embedded as an insert in the material of the said friction track (1,2), and the opposite end housed as an axially sliding insert in the material of the said disc hub (3).

2. Disc, according to Claim 1, in which the said opposite end, housed so as to slide freely in the disc hub (3), of the said pins (10) is lubricated with graphite.

3. Disc, according to Claim 1 or 2, in which that end of each pin (10) which is embedded permanently in the friction track (1,2) is provided with grooves (26) or reliefs for gripping purposes.

4. Process for producing a ventilated disc for a disc brake, with a friction track (1, 2) and a disc hub (3) separated by an annular space and connected to each other by a plurality of pins (10) with one end engaged in the said track (1,2) and the other in the said disc hub (3), the said process comprising the following steps:
- forming a casting core, in the general shape of a circular plate like the rim of a hat, in which are inserted and positioned a plurality of pins (10) oriented radially with respect to the centre (O) of the said plate, their radially outer ends being provided with gripping means, such as annular grooves (26), ridges or other similar reliefs and depressions, and their radially inner ends being lubricated with graphite, the said core having a thickened annular bead (25) corresponding to the space between the said track (1,2) and the said disc hub (3) for locating and supporting the said pins (10),
- placing the said core (20, 21) in a mould (23, 24) configured in such a way as to form, together with the said core, a first chamber (260) corresponding to the said track (1,2) and a second chamber (27) corresponding to the said disc hub (3), in order to produce the said track (1,2) and the said disc hub (3) together, attached by at least the said pins (10), by casting in the said first and second chambers,
- pouring molten metal into the said mould,
- demoulding the said friction track (1,2) and the said disc hub (3) together, and
- removing unwanted metal from the casting by machining it off.

5. Process, according to Claim 4, in which the said thickened core bead (25), together with the said casting, leaves at least one connecting gap between the said first and second chambers so that with a single casting of the same material, the said friction track (1,2) and the said disc hub (3) are produced together, joined by the material contained in the said gap as well as by the said pins (10).

6. Process, according to Claim 5, in which the material corresponding to the said gap is machined off.

7. Process, according to Claim 4, in which the said core bead (25), together with the said mould, completely separates the said first cavity from the said second cavity so that materials having differing mechanical characteristics can be cast into the two cavities.

## Patentansprüche

1. Belüftete Scheibe für eine Scheibenbremse der Art, bei der eine Reibungsbahn (1, 2) durch Gießen hergestellt und mit einer tragenden Scheibennabe (3), die ebenfalls gegossen ist, mit Hilfe von Verbindungselementen in der Form von Stiften (10) verbunden ist, die am Umfang der Scheibennabe (3) verteilt angeordnet sind,
**dadurch gekennzeichnet, dass**
die Stifte (10) ein Ende aufweisen, das mit Verankerungsmitteln als Einsatz fest in dem Material der Reibungsbahn (1, 2) eingebettet ist, während das entgegengesetzte Ende als axial verschiebbarer Einsatz in das Material der Scheibennabe (3) eingreift.

2. Scheibe nach Anspruch 1, bei der das entgegengesetzte Ende der Stifte (10), das frei gleitbar in der Scheibennabe (3) untergebracht ist, mit Graphit geschmiert ist.

3. Scheibe nach Anspruch 1 oder 2, bei der das Ende jeden Stiftes (10), das ständig in der Reibungsbahn (1, 2) eingebettet ist, mit Nuten (26) oder Vorsprüngen als Verankerungsmittel versehen ist.

4. Verfahren zur Herstellung einer belüfteten Scheibe für eine Scheibenbremse mit einer Reibungsbahn (1, 2) und einer Scheibennabe (3), die durch einen Ringspalt voneinander getrennt sind und untereinander durch mehrere Stifte (10) verbunden sind, deren eines Ende in die Reibungsbahn (1, 2) und deren anderes Ende in die Scheibennabe (3) eingreift, bestehend aus folgenden Schritten:
- Herstellung eines Gießkernes in der allgemeinen Form einer kreisförmigen Platte in der Art eines Hutrandes, in den eine Vielzahl von Stiften zum Zentrum (O) der Platte radial ausgerichtet angeordnet und eingesetzt sind, wobei deren radial äußeren Enden mit Verankerungsmitteln wie Ringnuten (26), Vorsprüngen oder anderen ähnlichen Erhebungen oder Vertiefungen versehen sind und deren radial inneren Enden mit Graphit geschmiert sind, wobei der Kern einen verdickten ringförmigen Rand (25) aufweist, der den Abstand zwischen der Reibungsbahn (1, 2) und der Scheibennabe (3) entspricht und zur Anordnung und zum Halten der Stifte (10) dient,
- Anordnung des Kerns (20, 21) in einer Form (23, 24), die so ausgebildet ist, dass sie mit dem Kern eine erste Kammer (260) entsprechend der Reibungsbahn (1, 2) und eine zweite Kammer (27) entsprechend zu der Scheibennabe (3) bildet, um die Reibungsbahn (1, 2) und die Scheibennabe (3) gemeinsam herzustellen, die dann mindestens über die Stifte (10) durch das Ausgießen der ersten und der zweiten Kammer befestigt sind,
- Einfüllen von geschmolzenem Metall in die Form,
- gemeinsames Entformen der Reibungsbahn (1, 2) und der Scheibennabe (3) und
- Entfernen von unerwünschtem Metall aus dem Gießprozess durch Bearbeitung.

5. Verfahren nach Anspruch 4, bei dem der verdickte Kernrand (25) zusammen mit dem Guss mindestens einen Verbindungsspalt zwischen der ersten und der zweiten Kammer belässt, so dass durch einen einzigen Guss desselben Materials die Reibungsbahn (1, 2) und die Scheibennabe (3) gemeinsam hergestellt werden und durch das Material, das in dem Spalt enthalten ist und durch die Stifte (10) untereinander verbunden ist.

6. Verfahren nach Anspruch 5, bei dem das dem Spalt entsprechende Material durch Bearbeitung entfernt wird.

7. Verfahren nach Anspruch 4, bei dem der Kernrand (25) zusammen mit der Form die erste Hohlkammer von der zweiten Hohlkammer vollständig trennt, so dass in die beiden Hohlkammern Material mit differierenden mechanischen Eigenschaften eingießbar ist.

## Revendications

1. Disque ventilé destiné à un frein à disque, du type dans lequel une voie de friction (1, 2) est fabriquée par moulage et reliée à un moyeu de disque de support (3), également moulé, au moyen d'éléments de raccordement sous forme de broches (10) réparties autour du périmètre dudit moyeu de disque de support (3), ledit disque étant caractérisé en ce que lesdites broches (10) comportent une première extrémité munie d'un moyen de fixation fermement inséré sous forme d'un élément inséré dans le matériau desdites voies de friction (1, 2) et l'extrémité opposée étant logée en tant qu'élément inséré coulissant axialement dans le matériau dudit moyeu de disque (3).

2. Disque, selon la revendication 1, dans lequel ladite extrémité opposée, logée de façon à coulisser librement dans le moyeu de disque (3) desdites broches (10) est lubrifiée avec du graphite.

3. Disque, selon la revendication 1 ou 2, dans lequel cette extrémité de chaque broche (10) qui est insérée de façon permanente dans la voie de friction (1, 2) est munie de gorges (26) ou parties en relief dans des buts de fixation.

4. Procédé de fabrication d'un disque ventilé destiné à un frein à disque, une voie de friction (1, 2) et un moyeu de disque (3) étant séparés par un espace annulaire et reliés l'un à l'autre par une pluralité de broches (10), une première extrémité étant en prise dans ladite voie (1, 2) et l'autre dans ledit moyeu de disque (3), ledit procédé comprenant les étapes suivantes :
- former un noyau de moulage, sous la forme générale d'une plaque circulaire semblable au bord d'un chapeau, dans lequel sont insérées et positionnées une pluralité de broches (10) orientées radialement par rapport au centre (O) de ladite plaque, leurs extrémités radialement extérieures étant munies de moyens de fixation, tels que des gorges annulaires (26), des nervures ou autres parties en relief et dépressions similaires, et leurs extrémités radialement intérieures étant lubrifiées avec du graphite, ledit noyau comportant un bourrelet annulaire épaissi (25) correspondant à l'espace entre ladite voie (1, 2) et ledit moyeu de disque (3) en vue de positionner et de supporter lesdites broches (10),
- placer ledit noyau (20, 21) dans un moule (23, 24) configuré de telle manière à former, en association avec ledit noyau, une première chambre (260) correspondant à ladite voie (1, 2) et une seconde chambre (27) correspondant audit moyeu de disque (3), de manière à fabriquer ladite voie (1, 2) et ledit moyeu de disque (3) ensemble, fixés par au moins lesdites broches (10), par moulage dans lesdites première et seconde chambres,
- verser le métal fondu dans ledit moule,
- démouler ladite voie de friction (1, 2) et ledit moyeu de disque (3) ensemble, et
- éliminer le métal non désiré du moulage en l'enlevant par usinage.

5. Procédé, selon la revendication 4, dans lequel ledit bourrelet de noyau épaissi (25), ainsi que ledit moulage, laissent au moins un interstice de raccordement entre lesdites première et seconde chambres de sorte qu'avec un seul moulage du même matériau, ladite voie de friction (1, 2) et ledit moyeu de disque (3) sont fabriqués ensemble, réunis par le matériau contenu dans ledit interstice de même que par lesdites broches (10).

6. Procédé, selon la revendication 5, dans lequel le matériau correspondant audit interstice est enlevé par usinage.

7. Procédé, selon la revendication 4, dans lequel ledit bourrelet de noyau (25), en association avec ledit moule, sépare totalement ladite première cavité de ladite seconde cavité de sorte que des matériaux présentant des caractéristiques mécaniques qui diffèrent peuvent être moulés dans les deux cavités.
